# EUROPÄISCHE PATENTANMELDUNG

(11) **EP 1 562 000 A1**
(43) Veröffentlichungstag der Anmeldung: **10.08.2005**
(21) Anmeldenummer: 05001898.5
(22) Anmeldetag: 31.01.2005
(51) Int. Cl.: F24D 12/02

(54) **Nutzung der Restwärme des Abgases eines Wärmeerzeugers**

(30) Priorität: 03.02.2004 DE 102004005194
(71) Anmelder: Luther, Gerhard, Dr., 66119 Saarbrücken (DE)
(72) Erfinder: Luther, Gerhard, Dr., 66119 Saarbrücken (DE)

(57) **Zusammenfassung**

Die Erfindung betrifft ein kombiniertes Verfahren zur praktisch vollständigen Nutzung der sensiblen und latenten Abgaswärme eines Wärmeerzeugers 1 für die Beheizung eines Gebäudes, wobei als Wärmeträger Wasser und Frischluft benutzt wird.

Zum Wärmeübertrag vom Abgas 1 b auf Wasser 4a (Bild 8, siehe beigefügte Abbildung) wird an einer Einleitungsstelle 96 (z.B. ein Revisionsstück 96a) Kühlwasser 4a in das Innere einer modernen Abgasleitung 90, die ja auch eine wasserdichte Verbindung zwischen Heizkessel und Kaminkopf darstellt, eingeführt. Dieses Kühlwasser 4a läuft dann an der Innenwand des Abgasrohres 90 als Film oder in Rinnsalen herunter und nimmt hierbei aus dem entgegen strömenden Abgas 1 b im direkten Kontakt Wärme und Kondenswasser auf, bevor es durch ein T-Stück 7 aus dem Abgasweg wieder ausgekoppelt wird. Nach Zwischenspeicherung 41 a wird es unter Nutzwärmeabgabe 48 wieder zur Einleitungsstelle 96 hoch gepumpt (Pumpe 22).

Das Kühlwasser 4a kann beispielsweise zur dezentralen Erwärmung von Frischluft genutzt werden. Frischluft kann aber auch direkt am kalten Ende der Abgasleitung durch einen Luftkondensationskühler erwärmt werden; als Verbrennungsluft im Abgas- Zuluft- Verfahren wird dann Abluft eines Raumes benutzt.

Das Verfahren kann nicht nur bei Brennwertgeräten sondern auch bei herkömmlichen Kesseln angewendet werden, wobei das heiße Abgas gegebenenfalls in einem temperaturfesten Heißgaskühler (HGK) zunächst auf eine verträgliche Temperatur herunter gekühlt wird.

## Beschreibung

Die Erfindung betrifft ein kombiniertes Verfahren zur praktisch vollständigen Nutzung der sensiblen und latenten Abgaswärme eines Wärmeerzeugers für die Beheizung eines Gebäudes, wobei als Wärmeträger Wasser und/oder Frischluft benutzt wird.

### I. Stand der Technik und Problemstellung

Eine Massenstromeinheit des Abgases einer Feuerungsanlage enthält noch fühlbare und latente Wärme. Die fühlbare Wärme des Abgases wird durch seine Temperatur und seine noch geringfügig von der Zusammensetzung abhängige spezifische Wärmekapazität beschrieben; seine latente Wärme wird durch seinen Wasserdampfgehalt, der auch durch die Taupunktstemperatur ausgedrückt werden kann, bestimmt . Hierbei gibt es beträchtliche Unterschiede zwischen den im Folgenden als "herkömmliche" Anlagen zusammengefassten alten Standardkesseln und den etwas moderneren Niedertemperaturkesseln einerseits und den aktuellen Brennwertkesseln andererseits. Aber auch bei üblichen Brennwertkesseln ist im Abgas oft noch ein beträchtlicher Anteil von im Prinzip auskondensierbarem Verbrennungswasser enthalten, da die Rücklauftemperatur einer Warmwasser Heizungsanlage den Grad der Kondensation im Kessel begrenzt und da auch der Beitrag der Kaminwärme, also des Wärmetransportes von der Abgasleitung über die Kaminwangen in das Haus, wegen der niedrigen Abgastemperaturen nicht mehr allzu hoch ist. Dies kann bereits optisch daran erkannt werden, dass bei Heizungsanlagen mit Brennwertkesseln oft noch eine gut sichtbare Wasserdampffahne aus dem Schornstein herauskommt und damit die unvollständige Brennwertnutzung offenbart. Schätzungen /1/ für die im praktischen Betrieb im gewichteten Jahresmittel anfallenden Kondensatmengen liegen bei nur 40-60% des Maximalwertes, was einem verbleibenden Nettoabgasverlust von ca. 5 bis 8% entspricht.

Es muss das Ziel des auf die tatsächliche Energieeinsparung orientierten Ingenieurs bleiben, den Nettoabgasverlust (/3/, /4/,/10/)) der gesamten Feuerungsanlage, die nach /2/ als Gesamtheit von Feuerstätte (Kessel) und Abgasanlage definiert wird, soweit wie möglich herunter zu drücken.

Als Stand der Technik zur Wärmerückgewinnung aus Abgas sind unzählige Verfahren und Vorrichtungen ersonnen worden. Ein systematischer Ansatz ist als "Abgaswandler Verfahren" (/5/, /6/, /7/) beschrieben worden. Die verfahrensgemäße Wärmerückgewinnung wird im Heizungsraum (wie beim Abgaswandler Verfahren), im Kamin oder auch am Ort der Wärmenutzung /8/ vorgenommen.

### Kritik des Standes der Technik:

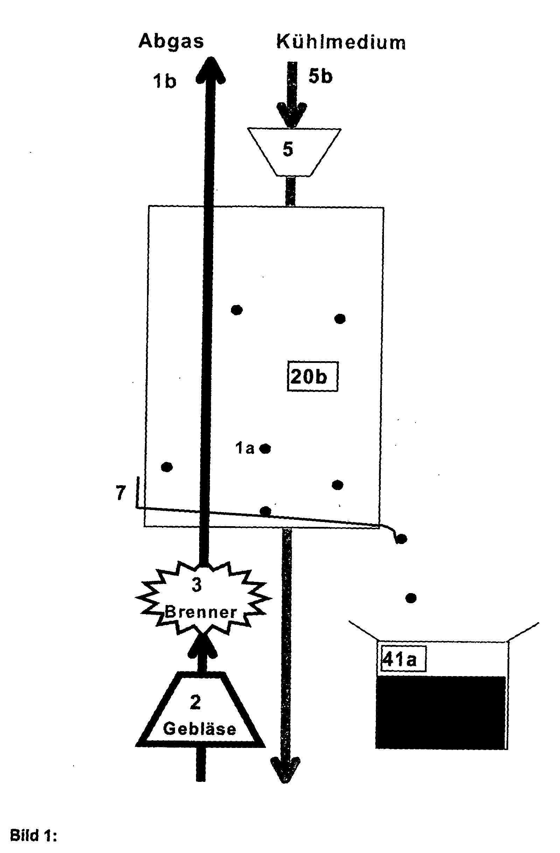

Ein Wärmeübertrager (Wüt) besteht im Prinzip aus einer Wärme übertragenden Fläche und aus je einer Fördermaschine (Pumpe oder Gebläse) für die beiden wärmetauschenden Medien; hinzu kommt bei einem Abgas- Wüt die Ausleitung und Entsorgung des (sauren) Kondenswassers. In der schematischen Darstellung in **Bild 1** drückt das Gebläse **2** die Verbrennungsluft und das Brenngas über den Brenner 3 als Abgas 1 b an der Vorderseite der Wärme übertragenden Trennwand 20b vorbei, während das Kühlmedium 5b von der Fördermaschine 5 an der Hinterseite der Trennwand 20b vorbei geführt wird. Durch die Abkühlung des Abgases 1 b kann Kondenswasser 1 a entstehen, das an der Trennwand 20b auf der Abgas Seite herunter läuft, über eine Auskoppel - Vorrichtung 7 gefasst und in einem Sammelbehälter 41 a aufgefangen wird. - Die bisherigen Verfahren zur Wärmerückgewinnung aus Abgas sind meist zu aufwendig, da sozusagen weitgehend vollständige Wärmeübertrager (Wüt) mit allen Komponenten gesondert bereitgestellt werden müssen.

Der Ausnutzungsgrad der Abgaswärme- Rückgewinnung wird durch die Temperatur des letzten Mediums, das die Restwärme aufnehmen soll, begrenzt. Im Abgaswandler Verfahren (/5/, /6/, /7/) ist dies die Umluft des Heizungskellers, der im Luftkondensationskühler (Bezugszeichen 30 in /6/ und /7/) am kalten Ende für die tiefste Kondensation des Abgases sorgt. Es ist klar, dass eine weitestgehende Wärmerückgewinnung nur mit Frischluft als Wärmeaufnehmer arbeiten kann. In /6/ und /7/ wurde daher auch auf Frischluft (also Außenluft) als Wärmeträger hingewiesen, allerdings ist die Frischluftnutzung dort nur mit großem Aufwand möglich, da die Frischluft extra zum Abgaswandler herangeführt werden muss.

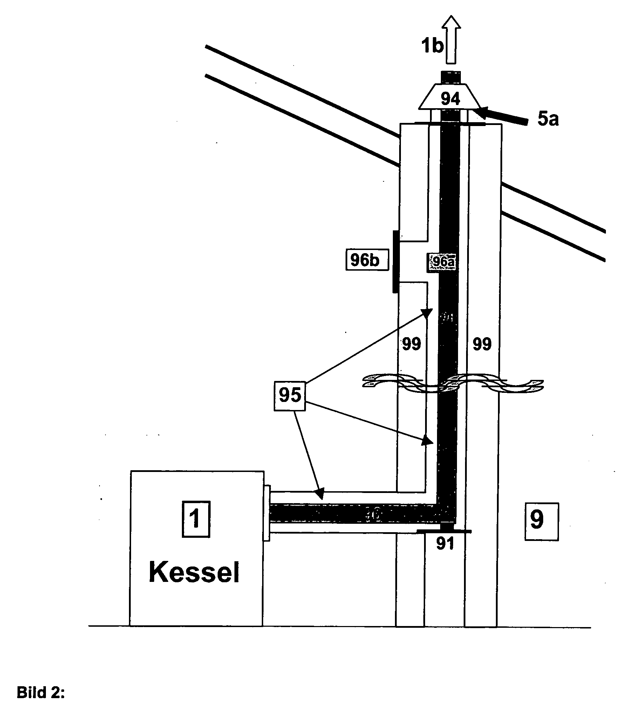

Außenluft als Wärmeträger wird auch benutzt im Abgas- Zuluftverfahren (Bild 2), bei dem die Verbrennungsluft 5a an der Unterseite der Schachtabdeckung 94 angesaugt wird und dann im Kamin 9 im Gegenstrom zum Abgas 1b durch den Zuluft Ringkanal 95 (also den Spalt zwischen Abgasrohr 90 und der inneren Wand des Kaminschachtes 99) geleitet wird und schließlich im Heizungskeller in einem das Abgasrohr 90 koaxial umhüllenden Zuluftrohr zum Wärmeerzeuger 1 geführt wird. Da die Menge dieser Außenluft jedoch durch ihre Funktion als Verbrennungsluft vorgegeben ist, kann auf diese Weise nur eine kleine Wärmemenge aufgenommen werden und die tiefe Temperatur der Außenluft kann nicht zu einer entsprechenden Temperaturabsenkung des Abgases genutzt werden.

### Problemstellung:

Das Ziel der Erfindung besteht darin, die restliche Nettoabgaswärme zunächst von Feuerungsanlagen mit Brennwertkesseln (= "Brennwertanlagen") noch weiter herunter zu drücken. Die hierzu entwickelten Verfahren lassen sich dann aber auch auf herkömmliche Feuerungsanlagen und sonstige Wärmeerzeuger übertragen und bringen dort noch einen erheblich höheren Gewinn.

### 2. Lösungsansatz

Dieses Ziel wird durch das in den Patentansprüchen 1 und 9 beschriebene Verfahren gelöst. Ein zur Durchführung des Verfahrens geeigneter Abgaswärmeübertrager, Wasser- Kondensationskühler und Luft- Kondensationskühler ist in den Patentansprüchen 3, 7 -8 und 10 beschrieben.

Vorteilhafte Ausgestaltungen des Verfahrens und der Vorrichtung sind in den Unteransprüchen angegeben. Ausführungsbeispiele der Erfindung sind in den Zeichnungen dargestellt und werden im Folgenden näher erläutert. Es zeigen:
- **Bild 1**:: Abgas Wärmeübertrager im Kondensationsbetrieb. Schematische Darstellung des Standes der Technik
- **Bild 2:**: Abgas- Zuluft -Verfahren nach dem Stand der Technik
- **Bild 3**:: Wasser- Kondensationskühler (WKK) als Abgas- Wärmetauscher mit innerer Wasserkühlung (schematische Darstellung).
- **Bild 4**:: Abgas- Zuluft Verfahren mit Abluft- Ansaugung.
- **Bild 5**:: Luft- Kondensationskühler (LKK) 8 überträgt die Abgaswärme auf einen Frischluftstrom 8a, der zur Belüftung und Beheizung des Hauses dient.
- **Bild 6:**: Längsschnitt durch Doppelrohr - Ausführung des Luftkondensationskühlers (LKK) als zylindrischer Aufsatz auf dem Kamin.
- **Bild 7:**: Abgasanlage mit Wasserkondensationskühler (WKK)
- **Bild 8**:: Abgasanlage mit Heißgaskühler (HGK) und Wasserkondensationskühler (WKK)
- **Bild 9**:: Kamin gestützte Wärmerückgewinnung aus dem Abgas eines herkömmlichen Kessels.
- **Bild 10:**: Kamin gestützte Wärmerückgewinnung mit Frischlufterwärmung im Wasserluftkühler (WLK).

Zur Lösung des Problemes wird von folgenden Ansätzen Gebrauch gemacht:
(1.) Weitergehende Nutzung der für eine Brennwertanlage sowieso zu installierenden Vorrichtungen zur Abgasleitung und Kondenswasser Ableitung.
(2.) Außenluft als direkten oder indirekten Wärmeaufnehmer am kalten Ende der Abgasleitung , die aber nicht als Verbrennungsluft sondern als erwärmte Zuluft zur Frischluft- Versorgung und Luftheizung genutzt wird.

### Zu (1.): WasserKondensationsKühler (WKK) im Innern der Abgasleitung

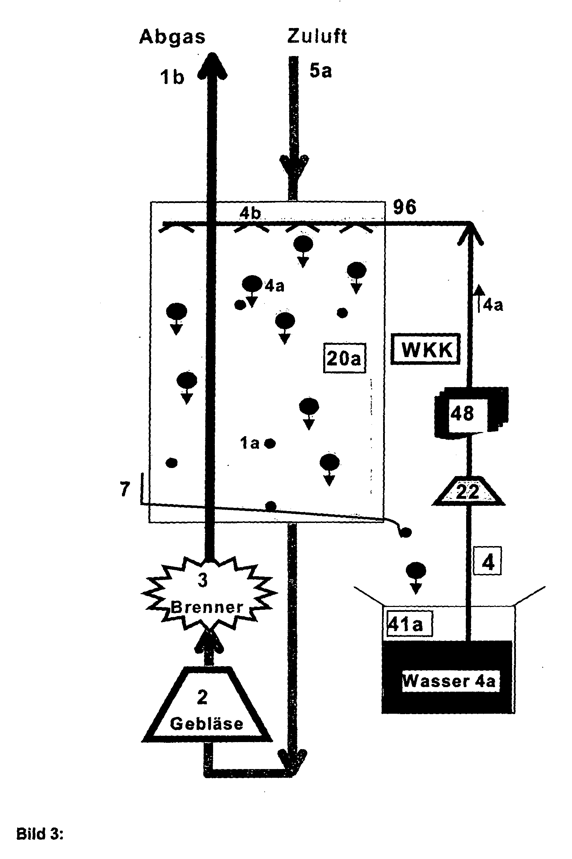

In der vorliegenden Erfindung wird Gebrauch davon gemacht, dass bei einer Brennwertanlage zur Abführung des Abgases wasser- und druckdichte Abgasleitungen 90 zur Verfügung stehen, die bis zu einer Temperatur von ca. 120 Grad Celsius mit Abgas 1 b beaufschlagt werden können, und die gleichzeitig darauf ausgelegt sind, dass im Inneren der Abgasleitung das auskondensierte Wasser 1 a wie in einem Abwasserrohr fließen kann. Durch diese wasserdichte Verbindung zwischen Heizkessel und Kaminkopf ist es möglich, die Abgasleitung 90 von innen zu kühlen. Dies geschieht erfindungsgemäß dadurch (Bild 3), dass an der **inneren**, also an der dem Abgas zugewandten Oberfläche (Innenwand 20a) der Abgasleitung 90 Kühlwasser 4a als Film oder in Rinnsalen herunter läuft; dieses kühlt das Abgasrohr 90 und nimmt gleichzeitig das Kondenswasser 1 a auf. Das Kühlwasser 4a kann dabei teilweise (oder auch vollständig) als Tropfen innen durch das Abgasrohr 90 fallen. Im Heizungskeller wird dann das Wasser durch ein T-Stück mit unten liegendem Abgang als Auskoppel - Vorrichtung 7 vom Abgasstrom 1 b getrennt und in einem Vorratsgefäß 41 a gesammelt. (Derartige Kondensatableitungen sind auch als Kondenswasser - Abzweig im Handel erhältlich.)

Es handelt sich um eine **"Wasser- Kondensationskühlung" (WKK)** (/6/ und /7/), also eine Auskühlung und Kondensation des Abgases mit Wasser als Wärme aufnehmendem Medium. Das auf diese Weise aufgewärmte Kühlwasser 4a muss dann - am besten in einer gesonderten Heizvorrichtung (z.B. Heizkörper 48 und/oder Frischlufterwärmer 49) - rückgekühlt werden. Eine der Kondensataufnahme im zeitlichen Mittel entsprechende Wassermenge muss aus dem Vorratsgefäß 41 a in die Kanalisation überlaufen.

Der Wasserkondensationskühler benutzt also bestehende Einrichtungen sowohl als "Wärmeübertragungsfläche" als auch als Fördermaschine für das Abgas (nämlich die innere Wand 20a des vorhandenen Abgasrohres 90 und das Gebläse 2 des Brenners 3). Auch die Kondenswasser Ableitung (und gegebenenfalls auch Behandlung) ist bereits bei jeder Brennwertanlage vorhanden.

### Zu (2.): LuftKondensationskühler (LKK) am Kaminende sorgt für warme Zuluft

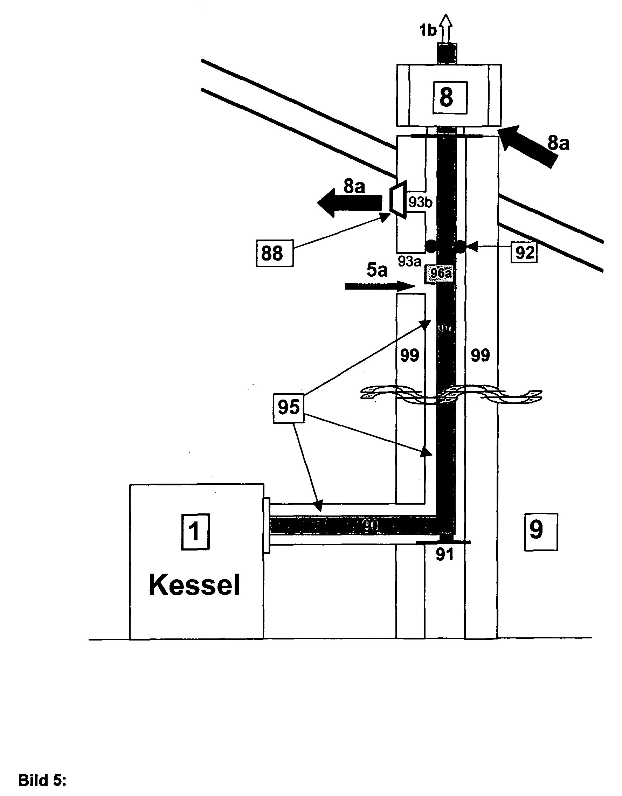

Am Kaminkopf ist Platz genug für einen Abgas- Frischluft Wärmetauscher. Der benötigte Frischluftstrom übersteigt mengenmäßig bei weitem den Abgasstrom, so dass der Abgasstrom effizient gekühlt werden kann. In einem **"Luftkondensationkühler" (LKK)** (8 in Bild 5) wird also das Abgas 1b durch entgegen strömende Frischluft 8a gekühlt und weitestgehend auskondensiert. Das Kondensat läuft in der üblichen Weise "bestimmungsgemäß" die Abgasleitung 90 herunter und ist Teil des sowieso im Kamin ausfallenden Kondensates. Natürlich ist es zweckmäßig, diese Frischluft 8a im oberen Teil des Hauses zu nutzen.

Andererseits kann die Frischluft 8a aber auch zur letzten Auskühlung des Kühlwassers 4a in einem Wasserluftkühler (WLK) 49 benutzt werden (siehe oben).

### 3. Weitere Ausgestaltungen und Beispiele

### 3.1 Abluft aus dem Gebäude als Zuluft für den Brenner:

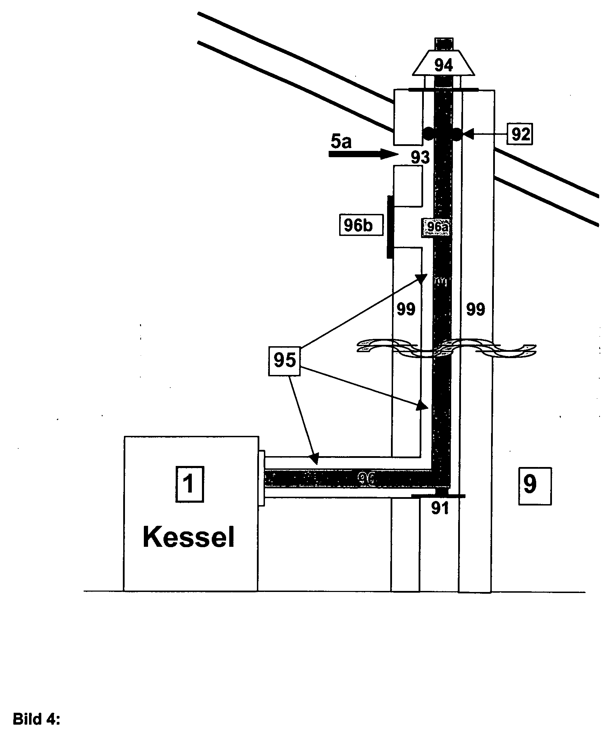

1. Das Abgas- Zuluft Verfahren wird zweckmäßigerweise so abgewandelt, dass statt Außenluft nun Abluft aus dem Innern des Gebäudes als Verbrennungsluft 5a für den Brenner 3 benutzt wird (Bild 4). Hierzu wird beispielsweise aus irgendeinem Raum (oder auch aus dem Treppenhaus) Abluft als Verbrennungsluft 5a über eine Schachtöffnung 93 und den Ringspalt 95 des Kamins 9 in den Kessel 1 gesaugt. Abluft als Verbrennungsluft 5a hat gegenüber frischer Außenluft folgende Vorteile:
- Der Wärmeinhalt der Abluft wird vollständig genutzt.
- Der Wassergehalt der Abluft ist gegenüber dem der Frischluft meist erhöht. Auch der hierdurch bedingte erhöhte Enthalpiegehalt wird im Luftkondensationskühler letztendlich wieder zurückgewonnen.

Die obere, zur Außenluft führende Öffnung des Ringkanals 95, also des Ringspaltes zwischen Abgasleitung 90 und altem Kaminschacht 99, kann dann zweckmäßigerweise geschlossen werden. Hierzu dient eine Blende 92, die im Ringkanal 95 (wie in **Bild 4** gezeigt) oder aber auch im Innern der Schachtabdeckung 94 angeordnet werden kann. Der Hauptstrom der Verbrennungsluft 5a für den Kessel 1 sollte zwar aus dem Innern des Gebäudes erfolgen, aber die Schließung (Blende 92) muss nicht unbedingt vollständig erfolgen.

Sollte es formale Bedenken wg. Brandschutz geben, - ein Feuer im Keller könnte ja seine Rauchgase ausgerechnet durch den Ringkanal 95 des Kaminschachtes zwängen und so die Stockwerke überwinden -, kann in die Schachtöffnung 93 eine Rückschlag- Klappe eingesetzt werden, die einen Gasstrom aus dem Schacht heraus blockieren würde.

Wenn der obere Teil des Abgasrohres durch den Luftkondensationskühler (LKK) 8 "blockiert" ist, wird durch die beschriebene Nutzung der Abluft dennoch eine Hinterlüftung der Abgasleitung weiterhin ermöglicht. Dies gilt auch dann, wenn nur ein Teil der Zuluft nach dem Abgas-Zuluft Verfahren bereitgestellt wird.

### 3.2 Erwärmte Frischluft aus dem Luftkondensationskühler (LKK):

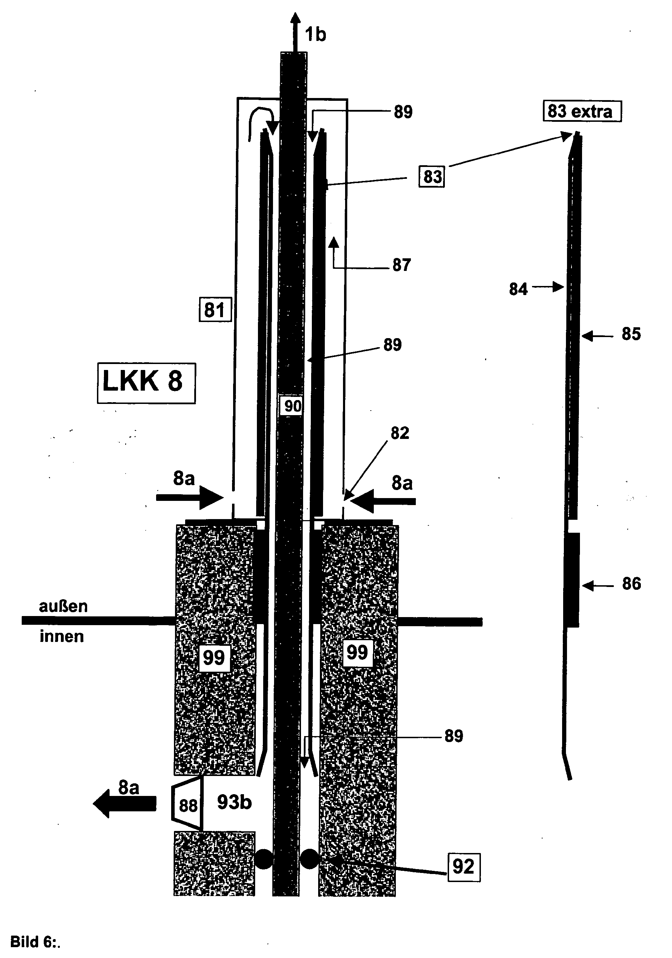

2. Bild 5 zeigt eine Realisierung des Verfahrens zur Erwärmung von Frischluft 8a in einem Luftkondensationskühler (LKK) 8. Hierbei wird die Außenluft 8a am Rande des LKK 8 so angesaugt, dass sie zunächst an der Innenseite der äußeren Wand des LKK entlang strömt, so dass die Wärmeverluste nach außen minimiert werden. Im Innern des LKK 8 wird dann die Außenluft 8a im Gegenstrom durch das abfließende Abgas 1b aufgewärmt Der so aufgewärmte Frischluftstrom kann dann koaxial zum Abgasrohr 90 zu einem Nutzungsraum oder auch ins Treppenhaus geführt werden.
   Die Beförderung der Außenluft wird durch ein Gebläse 88 angetrieben, das in einer Schachtöffnung 93b sitzt und den gesamten Transport durch den LKK 8 und die Zuleitung sowie das Ausblasen in den Raum übernimmt. Durch die Blende 92 (in **Bild 5**) wird der Ringkanal 95 nach unten abgesperrt, so dass eine Trennung der Frischluft 8a im oberen Teil von der Verbrennungsluft 5a im unteren Teil erfolgt. Die Dichtigkeit der Blende 92 ist jedoch nicht kritisch, da schlimmstenfalls nur etwas Umluft in den Frischluft- Zweig bzw. etwas Frischluft in den Verbrennungsluft- Zweig gelangen. Die Verbrennungsluft 5a wird über eine Schachtöffnung 93a angesaugt, bei dieser Schachtöffnung kann es sich beispielsweise- wie in **Bild 5** bereits angedeutet, um die "obere Reinigungsklappe " (96b in **Bild 4**) des Kaminschachtes handeln.
3. Man könnte das Gebläse 88 auch am frischluftseitigen Eingang des LKK 8 anordnen. Dies würde den Schallschutz verbessern und durch den Überdruck auf der Frischluftseite zusätzlich garantieren, dass kein Abgas in die Zuluftleitung gelangt. Dafür handelt man sich aber zusätzliche Probleme wg. der schlechteren Zugänglichkeit und Vereisungsgefahr etc. ein. Auch Zwischenpositionen, z.B. eine Anordnung des Gebläses 88 am Ausgang des LKK 8, sind möglich.
4. Die Frischluft kann nach Verlassen des LKK 8 auch in einem gesonderten Schacht (z.B. einem leerstehenden Kaminschacht) geführt werden.
5. Der Luftkondensationskühler 8 (LKK) soll abgasseitig möglichst mit dem bereits vorhandenen Brennergebläse 2 auskommen. Daher empfiehlt es sich, in den Abgasweg nur sehr sparsam weitere Strömungswiderstände einzubauen. Wegen des durch die Kondensation erhöhten Wärmeüberganges und wegen des kleineren Volumenstromes lässt sich dies auch erreichen. Umgekehrt muss der Ventilator 88 für die Frischluft 8a sowieso neu bereitgestellt werden; er kann daher für notwendige Krümmungen und alle Schikanen zur Erhöhung des Wärmeüberganges ausgelegt werden.
6. In vielen älteren Schornsteinen ist mehr als ein Kaminschacht enthalten, obwohl nur ein einziger Schacht zur Abgasabführung genutzt wird. Im Bereich des Kaminkopfes lässt sich dann durch eine Entfernung der Trennwände zwischen den Kaminschächten ein Bauvolumen gewinnen, das den Luftkondensationskühler (LKK) 8 optisch verdeckt aufnehmen kann. Wie ein "Gold- Inlay in einem ausgebohrten Backenzahn" kann also ein Wärmetauscher **in einem entkernten Kaminkopf** untergebracht werden.
9. Der Luftkondensationskühler (LKK) 8 kann auch zylinderförmig als Aufsatz auf den Kaminkopf ausgeführt werden (Bild 6), so dass er sich von außen optisch nicht von den üblichen über das Kaminende weit hinausragenden, meist aus Edelstahl gefertigten "Sanierungskaminen" unterscheidet. Der Optik wegen kann man sogar die äußere Ummantelung des LKK, die äußere Hülle 81, aus einem Edelstahlblech fertigen, was auch die innenseitige Wärmeaufnahme durch Wärmestrahlung verringert.
   Der Wärmetausch erfolgt dann (beispielsweise) im "Doppelrohr-Verfahren". Die Frischluft 8a wird durch Ansaugöffnungen 82, die in sicherem Abstand und geometrisch geschützt von der Mündung des Abgasrohres 90 liegen, angesaugt und steigt zunächst langsam in einem relativ breiten äußeren koaxialen Spalt 87 nach oben, um dann in einen relativ engen inneren koaxialen Spalt 89 direkt am warmen Abgasrohr 90 entlang und im Gegenstrom zum Abgas 1b mit größerer Geschwindigkeit nach unten geführt zu werden. Der von der Frischluft 8a durchflossene innere Spalt 89 kann so eng ausgeführt werden, dass sich ein ausreichend hoher Wärmeübergang ergibt. Das hinsichtlich des Wärmeüberganges auf der Frischluftseite optimierte Hüllrohr 83 kann sich bis in den Kaminschacht 99 hinein und sogar weiter bis zur Schachtöffnung 93b hin erstrecken. Die so aufgewärmte Frischluft 8a wird schließlich an der Schachtöffnung 93b vom Gebläse 88 in den Nutzbereich des Gebäudes gedrückt.
   Das innere koaxiale Hüllrohr 83 besteht aus einem Kunststoffrohr 84 mit außen liegender Wärmedämmschicht 85 in dem über das Dach hinausragenden Teil. Ein wärmegedämmter Passring 86 dient zur Verankerung im Kaminschacht 99. Abgasrohr 90 und Hüllrohr 83 können mechanisch miteinander verbunden sein: dies verbessert die Stabilität und den Wärmeübergang auf die Frischluft 8a. Durch die Blende 92 wird der Frischluft führende Bereich nach unten abgeschlossen. Der darunterliegende Teil des Kaminschachtes kann dann in der nach Bild 4 modifizierten Weise zur Zuführung von Verbrennungsluft im Abgas- Zuluft- Verfahren benutzt werden.

### 3.3 Warmes Wasser aus dem Wasserkondensationskühler (WKK)

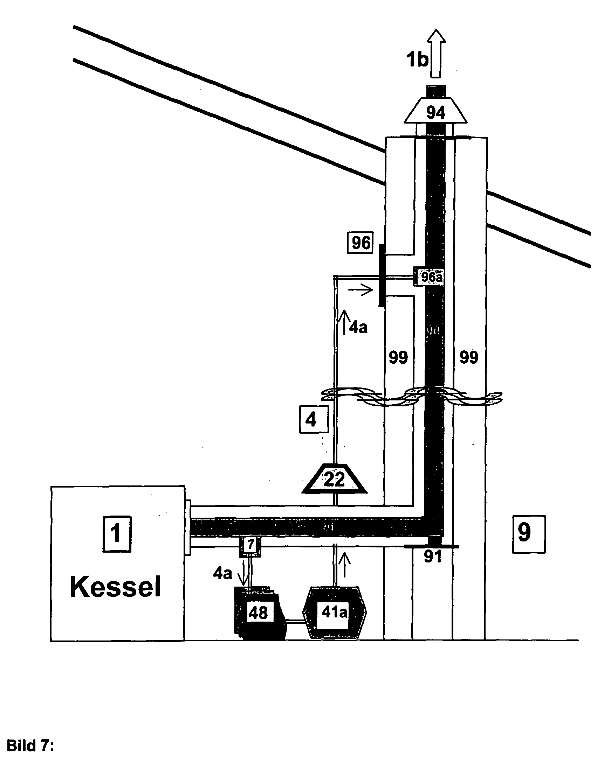

Bild 7 zeigt eine andere Darstellung des Wasserkondensationskühlers (WKK). Die Kühlwasserpumpe 22 pumpt das Kühlwasser 4a über die Zuleitung 4 am Revisionsstück 96a in das Innere des Abgasrohres 90, an dem es dann innen (in **Bild 3** wird dies als Innenwand 20a bezeichnet) wieder herunter läuft und an der unteren Auskoppel - Vorrichtung 7 - , z.B. einem Abzweig, vom Abgasstrom 1 b getrennt wird; dann gibt es seine Wärme über einen Wärmetauscher 48 ab und wird im Vorratsgefäß 41a gesammelt. Der Niedertemperatur- (NT) Heizkörper 48 kann sich auch in einem Nutzraum oder in der Umgebung der oberen Einspeisestelle 96 befinden; dann wird natürlich die Reihenfolge von Heizkörper 48 und Vorratsgefäß 41a vertauscht.

### 3.3.1 WKK: Einspeisung des Kühlwassers:

10. Grundsätzlich sollte die Einspeisung des Kühlwassers 4a möglichst weit oben im Kamin erfolgen; und zwar aus 2 Gründen:
   - Die zur Verfügung stehende Wärmetauscherfläche kann besser ausgenutzt werden.
   - Die mittlere Temperatur der Abgassäule im Abgasrohr liegt höher und damit erhöht sich der Auftrieb des Abgases, was zu einer Entlastung des Brennergebläses 3 führt. Außerdem wird dadurch die Kaminwärme größer.
11. Die Einspeisestelle 96 des Kühlwassers 4a für die Wasser- Kondensationskühlung (WKK) im Innern des Abgasrohres kann beispielsweise an dem Revisionsstück (96a) an der oberen Reinigungsklappe 96b oder an einem eigens eingesetzten Revisionsstück erfolgen. Hierzu ist lediglich an dem Verschlussdeckel des als T-Stück ausgeführten Revisionsstückes eine Bohrung für die Durchführung der Wasserzuführung anzubringen.
12. Die Einspeisung des Kühlwassers kann auch am Kaminkopf stattfinden. Da Kühlwasser 4a nur dann eingespeist wird, wenn der Kessel 1 in Betrieb ist, besteht keine Einfriergefahr. Eine Einspeisung über die Kaminmündung hat den Vorteil, dass in einem Adapterstück, das auf das Endstück des Abgasrohres 90 aufgesteckt wird, besondere Vorrichtungen zur gleichmäßigen Verteilung des Kühlwassers 4a ohne Behinderung des Abgasstromes 1b vorgesehen werden können.

### 3.3.2 WKK: Zuleitung des Kühlwassers:

13. Die Zuleitung 4 des Kühlwassers 4a kann im Kaminschacht 99 des Abgasrohres 90 erfolgen. Bei gleichzeitiger Verlegung kann die Kühlwasserleitung 4, die ja nur für kleine Wasserströme auszulegen ist, am Abgasrohr 90 flexibel (wg. der unterschiedlichen Temperaturausdehnung) befestigt werden. Das Gewicht des gefüllten Wasserrohres ist immer noch klein gegenüber dem Gewicht des Abgasrohres, so dass das zusätzliche Gewicht unproblematisch ist.
13a Die Zuleitung 4 des Kühlwassers 4a kann auch im Innern des Abgasrohres 90 selbst erfolgen. Dies hat den Vorteil, dass die Höhenlage der Einspeisestelle 96, für die ja dann kein gesonderter Zugang zum Abgasrohr mehr notwendig ist, frei gewählt werden kann. Diese Anordnung ist daher auch für Pumpen mit kleinerer Förderhöhe geeignet. Allerdings ergibt sich auch ein thermodynamischer Nachteil: die Zuführungsleitung 4 verläuft dann nämlich im thermischen Gleichstrom mit dem warmen Abgas.
   Da der Durchmesser der Zuleitung beispielsweise nur 1/5 oder 1/10 der lichten Weite des Abgasrohres beträgt, kann die Verringerung des für den Abgastransport verfügbaren Querschnittes vernachlässigt werden.
   Zur Realisierung einer im Abgasrohr 90 innen verlegten Zuführung 4 eignet sich beispielsweise ein temperaturbeständiger "Chemieschlauch" (z.B. aus hochvernetztem Polyethylen oder aus Polyamid), der am unteren Ende mit der Pumpe 22 verbunden wird und an dessen oberem Ende das Kühlwasser 4a aus einer Spritzdüse austreten kann. Der Chemieschlauch ist flexibel und kann daher auch durch enge Bögen am Fußpunkt des Abgasrohres geführt werden Die mechanische Aufhängung des Schlauchs kann über ein Seil oder einen korrosionsfest isolierten Draht an der oberen Reinigungsklappe des Karmines oder an der Mündung des Abgasrohres erfolgen.
   In einer anderen Ausführung kann beispielsweise ein korrosionsfestes Rohr, an dessem unteren Ende ein flexible temperaturbeständige Zuleitung angebracht ist, in den Kamin eingeführt und über den Zuleitungsschlauch mit der Pumpe 22 verbunden. Das Rohr kann im Abgasrohr durch eine leichte spiralige Verdrehung stabilisiert werden.
14. Die Zuleitung des Kühlwassers 4a kann auch in einem stillgelegten Nachbar- Kaminschacht erfolgen. Dies ist insbesondere bei Einspeisung am Kaminkopf (siehe Punkt 12) ganz praktisch, da die Überleitung von einem Kaminschacht in den anderen "über Kopf" besonders einfach ist.
15. **Einbindung in Brauchwassersystem:** Eine weitere Möglichkeit besteht darin, dass das Kühlwasser 4a, in dem sich mit der Zeit der Anteil des sauren Kondenswassers 1 a immer mehr anreichert, neutralisiert wird und dann nach Abgabe seiner zu Heizzwecken nutzbaren Wärme in eine Brauchwasseranlage (die z.B. im Rahmen einer Regenwasser Nutzung installiert ist) eingespeist wird. Ein Abzweig der Brauchwasserleitung muss dann an die Einspeise Stelle 96 des Kühlwassers 4a herangeführt werden. Die Versorgungspumpe des Brauchwassersystems, das sogenannte "Hauswasserwerk", übernimmt dann automatisch auch den Transport des Kühlwassers 4a. Diese Vorgehensweise ist übrigens auch ökologisch am vorteilhaftesten, da kein Wasser verschwendet wird und kein saures Abwasser 1 a in die Kanalisation gelangt.
16. **Niedriger Kühlkreislauf:** Es kann vorteilhaft sein, wenn der sekundäre Kühlkreis nicht bis hinunter in den Heizungskeller geführt wird. Bei Einspeisung des Kühlwassers am Kaminkopf kann die Ausleitung beispielsweise bereits schon an der oberen Reinigungsklappe 96b erfolgen. Hierbei muss ein innerer Auffangkanal benutzt werden, - also eine Vorrichtung, die das die innere Rohrwand herunter laufende Kühlwasser 4a auffängt und nach außen führt. Derartige Vorrichtungen werden beispielsweise bei der Regenwassernutzung zur Auskopplung von Regenwasser aus einer Fallleitung eingesetzt. Das überschüssige (!) Kondenswasser kann über das Abgasrohr zur üblichen Auskopplung im Bereich des Kessels eingeleitet werden, so dass hierfür keine zusätzlichen Kosten entstehen.
   Diese Wasserkondensationskühlung zwischen Dachgeschoß und Kaminkopf besitzt zwei Vorteile:
   (1) Der niedrige Hub des Kühlwassers erlaubt den Einsatz einer einfachen und sehr preisgünstigen Heizungswasser - Umwälzpumpe.
   (2) Eine größere Menge an direkter Kaminwärme wird genutzt: Das Abgasrohr 90 bleibt nämlich im Innern der Gebäudes bis zur konzentrierten Kühlung im oberen Bereich warm. Es kann daher eine größere Wärmemenge über Wärmestrahlung (insbesondere bei einem Kunststoffrohr) und Konvektion an den Kaminschacht 99 und von dort über die Kaminwangen direkt als Nutzwärme an das Haus abgeben

   Die Kaminwärme ist eine besonders praktische Form der Beheizung, da sie keine weiteren technischen Vorrichtungen erfordert. Sie ist besonders hoch bei
   - einem herkömmlichen Kessel (wg. der höheren Abgastemperatur)
   - einem modulierenden Brenner, der selten ausschaltet und meist mit niedriger Leistung arbeitet
   - einem Abgasrohr aus Kunststoff (wegen der höheren Wärmeabstrahlung im Vergleich etwa zu Edelstahl)
   - höherer Geschwindigkeit der Luft im Ringspalt 95, wegen der erhöhten Konvektion
   - Gegenstrom von Abgas und Luft im Ringspalt 95, weil dann keine Abluftverluste durch Hinterlüftung auftreten
17. **Niedriger Kühlkreislauf mit kompaktem LKK und WKK.** Bei gleichzeitigem Betrieb eines Luftkondensationskühlers (LKK) und eines WKK ist es vorteilhaft das Kühlwasser 4a nicht direkt am kalten Ende des Abgasrohres 90 einzuspeisen sondern erst an einer Stelle, an der die im LKK strömende Frischluft 8a sich bereits etwas aufgewärmt hat. Dadurch verliert die Frischluft 8a nicht ihr Potential zur weitest möglichen Absenkung der Temperatur des Abgases 1 b.
   Eine kompakte Kombination von WKK und LKK könnte beispielsweise bestehen aus einem über den Schornsteinkopf hinausragenden Doppelrohr - Wüt nach **Bild 7,** in dessen Abgasrohr 90 "auf halber Höhe" das Kühlwasser 4a eingespeist wird. Die Auskoppelvorrichtung 7 für das Kühlwasser 4a könnte dann in Höhe der Schachtöffnung 93b, aus der die Frischluft 8a durch das Gebläse 88 in den Raum geblasen wird, eingebaut werden. Dieses räumliche Zusammenlegen des Frischluft Ausganges und der Kühlwasser- Auskoppelung an einer ziemlich weit oben im Kamin angeordneten Stelle, z.B. im ausgebauten Dachgeschoss, hat folgende Vorteile:
   (1) alle Vorteile des im Punkt 16 dargelegt "niedrigen Kühlkreislaufes" (preiswerte Pumpe, geringe Pumpkosten, hoher Anteil von Kaminwärme)
   (2) nur eine "Baustelle", sofern auch die Rückkühlung des erwärmten Kühlwassers 4a im gleichen Raum wie die Frischluftversorgung durch den LKK erfolgt.

Insbesondere beim nachträglichen Ausbau eines Dachgeschosses ergibt sich die Möglichkeit, auch in einem alten Gebäude noch eine Niedertemperaturheizung einzubauen. Bei guter Wärmedämmung ergibt sich die Chance, die neue Nutzfläche aus der Restwärme des Abgases zu beheizen. Da man hierbei Installationskosten für die Anbindung an die bestehende Warmwasserheizung spart, dürfte dieser Fall eine besonders preisgünstige Anwendung der Erfindung darstellen.

### 3.3.3 WKK: Rückkühlung des Kühlwassers:

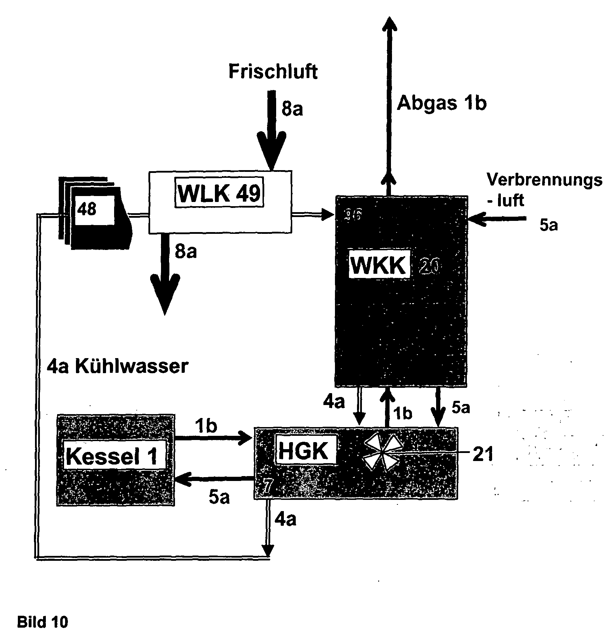

18. Für die Wasser- Kondensationskühlung (WKK) wird ein eigenständiger Niedertemperatur-Heizkreis bzw. Heizkörper 48 installiert, der eine besonders niedrige Rücklauftemperatur ermöglicht. Dies kann beispielsweise dadurch erreicht werden, dass als Heizkörper 48 ein Luft-Wasser- Wärmetauscher vorzugsweise mit zwangsweiser Luftumwälzung vorgesehen wird. Es ist beispielsweise auch daran gedacht, den Heizkörper 48 des Niedertemperatur- Heizkreises in unmittelbarer Nähe der Abgasleitung im Kellerbereich aufzustellen, und ihn direkt durch Umluft zu kühlen. Für die Durchströmung dieses Heizkörpers kann dann das vorhandene Gefälle zwischen Abgasrohr 90 und Kondensat- Sammelbehälter 41a genutzt werden.
18a. **Wasserluftkühler (WLK).** Statt durch Umluft kann das erwärmte Kühlwassers 4a aber auch durch Frischluft 8a rückgekühlt werden. Dazu wird die Frischluft 8a nicht durch das Abgas 1 b (wie in Bild 5, Bild 6 oder Bild 9) sondern in einem Wasserluftkühler (WLK) 49 durch das Kühlwasser 4a erwärmt (Bild 10). Dadurch erfolgt eine besonders tiefe Abkühlung des Kühlwassers 4a. Bei ausreichendem Lüftungsbedarf können ein oder auch mehrere an verschiedenen Stellen aufgestellte WLK die gesamte NT-Wärme an die Frischluft übertragen; dann übernimmt der WLK auch die Funktion des NT-Heizkörpers 48. Aus exergetischer Sichtweite ist es sehr attraktiv, wenn die Lüftungswärme weitgehend aus dem NT- Anteil der Abgaswärme gewonnen wird.

### 3.4 LKK und/oder WKK

19. Falls die vorhanden Brennwertanlage bereits zu einer guten Ausnutzung der Abgaswärme führt, kann auf den kamingetragenen Wasserkondensationskühler (WKK) verzichtet werden und die Restwärme alleine mit dem Luftkondensationskühler (LKK) ausgenutzt werden. Der WKK kommt vor allem dann zum Tragen, wenn die Rücklauftemperatur der vorhandenen Brennwertanlage für eine weitgehende Brennwertnutzung zu hoch ist, oder wenn die herkömmliche Feuerungsanlage nur im Abgassystem erneuert werden soll. (siehe den folgenden Abschnitt 4).

WKK und LKK sind zwei Instrumente, die je nach Ausführung und Auslegung gekoppelt werden können. Ein vorgeschalteter WKK erlaubt eine einfachere Ausführung des LKK, der dann nur noch das kalte Ende des WKK weiter herunter drücken muss und für eine kleinere Leistung auszulegen ist. Umgekehrt macht ein großzügig ausgelegter LKK den WKK überflüssig, erfordert dann aber möglicherweise einen erheblichen Mehraufwand bei der gezielten Verteilung der Frischluft im Gebäude.

Bei der Erwärmung der Frischluft 8a durch einen Wasserluftkühler 49 (siehe Punkt 18a: WLK) erübrigt sich ein gesonderter LKK im Abgasweg, da das Kühlwasser 4a bereits durch die Frischluft so weit heruntergekühlt werden kann, dass es das gesamte Wärmepotential des Abgases 1 b praktisch ausschöpft.

### 3.5 Weitere Optimierung und "Sowieso"-Effekte

**20. Flächenmäßiger Ablauf des Kühlwassers.** Beim Verfahren der inneren Kühlung, bei dem also Kühlwasser 4a an der Innenwand eines Abgasrohres 90 herunter läuft, ist es für die Optimierung des Wärmeüberganges vom Abgas 1 b auf das Kühlwasser 4a sicherlich günstig, wenn das Wasser möglichst breitflächig fließt. Dies kann durch eine Bearbeitung der inneren Oberfläche des Abgasrohres 90 verbessert werden. Eine derartige Optimierung sollte insbesondere dann ins Auge gefasst werden, wenn die verfügbare Fläche entwurfsbedingt relativ klein ist; wie es beispielsweise bei einer Anordnung nach Absatz 17 (Niedriger Kühlkreislauf mit kompaktem LKK und WKK) der Fall ist.
21. **Sowieso Effekt: Neutralisation**. Die technischen Anforderungen an die Pumpe 22 und damit deren Kosten sind deutlich niedriger, wenn das Kühlwasser 4a neutralisiert wird. Diese Neutralisation kann beispielsweise auch im NT-Heizkörper 48 oder im Sammelbehälter 41a dadurch stattfinden, dass diese mit geeignetem Granulat gefüllt werden.
   Die Neutralisation des Kondensates ist auch unabhängig von der hier beschriebenen Erfindung empfehlenswert: es werden die hauseigenen Abwasserleitungen, die bei alten Häusern meist aus gegenüber Säure etwas empfindlichen Gussrohren bestehen, und allgemein die Umwelt geschont.
22. **Sowieso Effekt: Kondensatpumpe.** Die Pumpe 22, die Förderpumpe für das Kühlwasser 4a, kann eine gegebenenfalls sowieso notwendige Kondensatpumpe ersetzen. Die Pumpe 22 pumpt dann das Kondensat zunächst in das Abgasrohr 90, dessen Auskopplungsvorrichtung 7 meistens deutlich höher als der Kondensatausgang des Kessels liegt. Von dieser erhöhten Stelle ist dann in der Regel ein freier, Schwerkraft getriebener Überlauf in die Kanalisation möglich.
   Erfolgt eine Neutralisation gemäß Absatz 21, so muss die Pumpe 22, obwohl sie für eine höhere Förderleistung und Höhe ausgelegt ist, nicht unbedingt viel teurer sein als eine klassische korrosionsfeste Kondensatpumpe.
23. **Außen liegende Wandheizung (aWH) als NT Senke.** Die Funktion des NT- Heizkörpers 48 kann in besonders geeigneter Weise durch eine außenliegende Wandheizung (aWH) wahrgenommen werden. Die aWH ist eine Flächenheizung, die sich an der Wandoberfläche vor einer thermischen Außendämmung ("Thermohaut") befindet /9/. Mit der aWH kann auch noch Heizwasser mit der Temperatur des Innenraumes und sogar darunter zur Heizung genutzt werden.
   Die Führung des Kühlwassers 4a durch die aWH kann als Teil der Zuleitung 4 zur Einspeisestelle 96 aufgefasst werden.
24. **Sichere Kalkulation durch Kondensatmessung.** Die Wirtschaftlichkeit einer Nachrüstung hängt entscheidend von den tatsächlichen Abgasverlusten der bestehenden Kesselanlage ab. Diese können zuverlässig und genau aus der Messung der tatsächlich anfallenden Kondensatmenge bestimmt werden /10/.

### 4. Anwendung auf herkömmliche Feuerungsanlagen

Man sollte eine Wärmerückgewinnung aus dem Abgas einer Brennwertanlage so auslegen, dass sie auch den Fall verkraften kann, dass im eigentlichen Brennwertkessel wegen zu hoher Rücklauftemperatur gar keine Brennwertnutzung mehr stattfindet. Dieser Fall unterscheidet sich jedoch an der Schnittstelle Kessel zum Kamin nur noch in 2 Punkten vom Normalbetrieb einer herkömmlichen Feuerstätte:
1. Die Abgastemperatur liegt konstruktionsbedingt unter 120 °C, da diese Temperaturbegrenzung durch den Einsatz einer Abgasanlage aus Kunststoff üblicherweise vorgeschrieben ist.
2. Der Gebläsebrenner des Brennwertkessels ist so ausgelegt, dass er im Kamin auch Überdruck erzeugen kann.

Zur Anpassung einer bestehenden herkömmlichen Feuerungsanlage an einen Betrieb als Brennwertanlage, wobei die Brennwertnutzung in einer neu zu installierenden und auf den Kondensatanfall ausgelegten Abgasleitung stattfindet, müssen also maximal nur noch zwei weitere Maßnahmen ergriffen werden:
1. Sofern das Abgas der herkömmlichen Anlage zu heiß ist oder theoretisch zu heiß werden könnte, muss es in einem Heißgaskühler (HGK) auf eine Temperatur abgekühlt werden, die mit der Weiterleitung in einem Abgasrohr aus Kunststoff verträglich ist. (Bei einem Edelstahl-Kamin entfällt diese Einschränkung).
2. Sofern bisher kein ausreichend starkes Gebläse vorhanden ist, muss dieses entweder im Brennerbereich (Gebläsebrenner), oder als Zugverstärker hinter dem Kessel oder als Abgasventilator am Schornsteinende installiert werden.

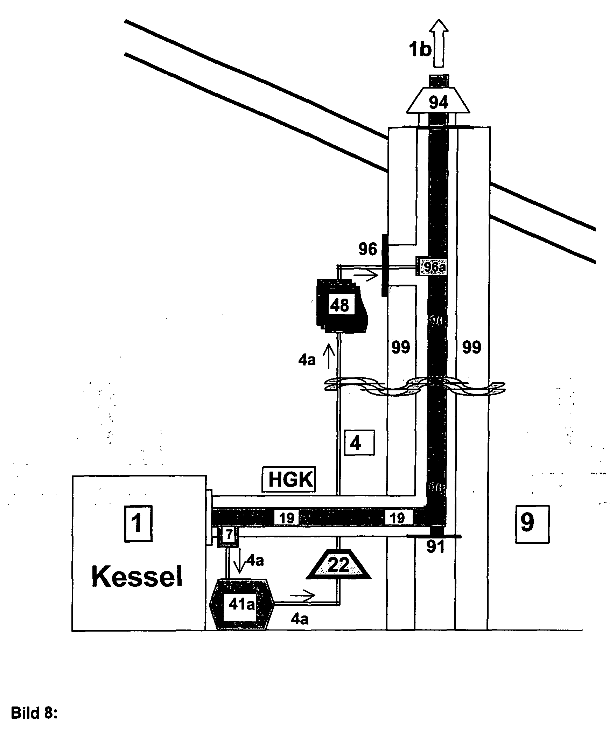

In **Bild 8** ist eine Abgasanlage mit Heißgaskühler (HGK) für eine Kamin gestützte Wärmerückgewinnung dargestellt. Der HGK besteht aus dem temperaturfesten Abgasrohr- Abschnitt 19 (z.B. aus Edelstahl oder Keramik), welches durch das Kühlwasser 4a des WKK im Innern und durch die im Abgas- Zuluftverfahren zugeführte Verbrennungsluft von außen gekühlt wird. Die Auskoppelung des Kühlwassers 4a mittels der Auskoppel - Vorrichtung 7 in den Sammelbehälter 41a erfolgt nahe am Kessel 1. Der Kühlwasserkreislauf entspricht sonst dem bereits aus **Bild 7** bekannten Muster: die Pumpe 22 befördert Kühlwasser 4a aus dem Vorratsbehälter 41 a und drückt es durch die Zuleitung 4 über den Niedertemperatur- Heizkörper 48 zur Einspeisungsstelle 96 am Revisionsstück 96a ; im Innern des Abgasrohres 90 läuft das Kühlwasser dann wieder herunter und erhält die letzte Aufheizung durch das noch relativ heiße Abgas im temperaturfesten Abgasrohr 19 zwischen Kessel 1 und Kaminfuß 91 .

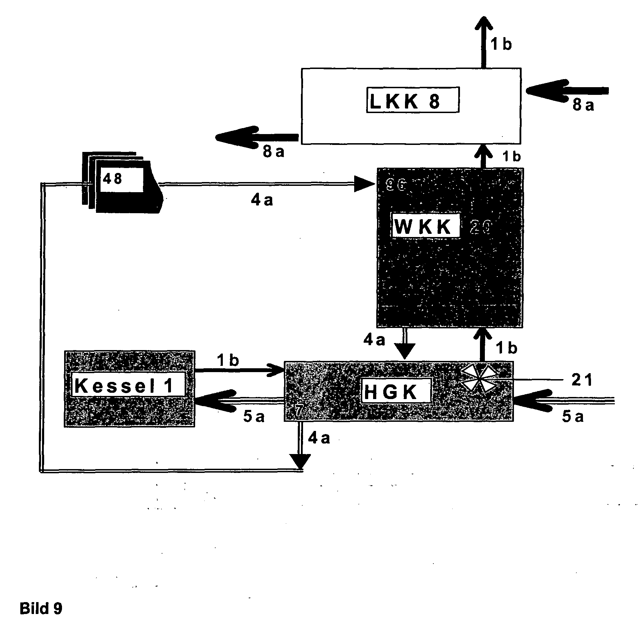

In **Bild 9** ist das Blockschaltbild eines erweiterten Ausführungsbeispieles einer derartigen Kamin gestützten Wärmerückgewinnung aus dem Abgas 1b eines herkömmlichen Kessels 1 dargestellt. Das Abgas 1b wird zunächst im Heißgaskühler HGK durch die Verbrennungsluft 5a und das aus dem Wasserkondensationskühler (WKK) kommende Kühlwasser 4a auf eine Temperatur abgekühlt, die mit seinem weiteren Transport durch den WKK 20 verträglich ist. Der erforderliche Beförderungsdruck wird hier durch den Druckverstärker 21 gewährleistet, der sich am Übergang vom Heißgaskühler (HGK) in den Wasserkondensationskühler (WKK) 20 befindet. Im Luftkondensationskühler (LKK) 8 erfolgt dann die letzte Abkühlung des Abgases 1b mit Außenluft 8a, die wiederum als aufgewärmte Frischluft dem Hause zugeführt wird. Die Rückkühlung des Kühlwassers 4a erfolgt in einem. Niedertemperatur- Heizkörper 48; die Wärme des Kühlwassers könnte aber auch in einem Wärmeübertrager auf den Rücklauf der Heizung übertragen werden.

In **Bild 10** zeigt gegenüber dem in Bild 9 gezeigten Ausführungsbeispiel eine Modifikation im Bereich der Frischlufterwärmung. Anstatt in einem LKK 8 erfolgt die Erwärmung der Frischluft 8a in einem Wasserluftkühler (WLK) 49 durch nochmalige Abkühlung des Kühlwassers 4a. Diese Anordnung ist sehr flexibel, da die Frischluft nicht mehr im Bereich der Abgasanlage zugeführt werden muss.

Die Funktion des Heißgaskühlers (HGK) wird vorzugsweise in einem Abgasrohr- Abschnitt 19 wahrgenommen, also dem Stück der Abgasleitung, das zwischen dem Kaminfuß 91 und dem Kessel 1 angeordnet ist (Bild 8). In diesem Heißgaskühler (HGK) müssen gegebenenfalls höhere Temperaturen ausgehalten werden als für ein aus Kunststoff bestehendes Abgasrohr 90 zwischen Kaminfuß 91 und Kaminkopf zulässig ist. Es müssen Vorkehrungen zur sicheren Abkühlung auf das dort zulässige Temperaturniveau getroffen werden.

Der Heißgaskühler (HGK) kann auf unterschiedliche Art und Weise realisiert werden:
- äußere Kühlung eines Abgasrohrstückes aus Metall durch mit Heizungswasser beaufschlagte Rohrwendel.
- Kühlung eines Abgasrohrstückes aus Metall durch den koaxialen Gegenstrom der Verbrennungsluft (Abgas- Zuluft - Verfahren)
- Kühlung eines Abgasrohrstückes aus Metall durch ein Umluftgebläse.
- innere Kühlung eines Abgasrohrstückes aus Edelstahl durch Restnutzung des bereits im WKK 20 vorgewärmten Kühlwassers 4a oder durch gesondertes Einsprühen von Kühlwasser. Wegen des großen Temperaturunterschiedes zwischen Abgas und Kühlwasser ist die Dimensionierung des HGK als Wärmetauscher eher unproblematisch.
- Beimischung von Fremdluft mit Umgebungstemperatur. Dieses Verfahren erfolgt bei atmosphärischen Gaskesseln bereits sowieso. Durch die Abgasverdünnung sinkt zwar der Taupunkt des Abgases, was zunächst ungünstig für die Ausbeute des Wasserkondensationskühlers ist. Für einen abschließenden Luftkondensationskühler (LKK), der ja mit kalter Außenluft 8a betriebenen wird, ist hingegen die Verdünnung des Abgases nicht mehr so problematisch.
- Auch Kombinationen der oben stehenden Einzelmaßnahmen sind möglich

Bisher wird das Abgasrohr aus Kunststoff für 120 °C ausgelegt. Daher kommt nicht ein einfaches Polypropylen (PP) - Abwasserrohr ("HT - Rohr") sondern ein "PP - Spezialrohr" zum Einsatz, das mehrfach teurer ist. Wenn das Abgas in einem Heißgaskühler (HGK) aber sowieso vorgekühlt werden muss, dann kann man es auch gleich soweit abkühlen, dass seine Temperatur den nachfolgenden Einsatz von handelsüblichem "HT" - Rohr erlaubt. Bei Kesseln mit hinreichend niedriger Abgastemperatur ist es denkbar, nur den Bereich des Heißgaskühlers (HGK) mit dem "PP - Spezialrohr" für Abgasleitungen auszuführen und das eigentliche Kaminrohr (die Abgasleitung 90 in **Bild 7**) aus einfachem Polypropylen (PP) Abwasserrohr ("HT - Rohr") zu bauen.

Da die meisten alten Kesselanlagen zu groß ausgelegt wurden bzw. naturgemäß nachträgliche Verbesserungen der Wärmedämmung des Hauses noch nicht berücksichtigen, kann die Leistung des Kessels vermindert werden. Dies führt zu einer niedrigeren Abgastemperatur, die jedoch wg. des erneuerten und feuchteresistenten Kamins zu keinen Problemen mehr führt. Daher sollte man zuerst die Kesselleistung vermindern und danach erst entscheiden ob und in welcher Form ein Heißgaskühler (HGK) erforderlich ist.

Verfügt der herkömmliche Kessel bereits über ein leistungsstarkes Gebläse, so muss nur noch durch einen Heißgaskühler für eine verträgliche Eintrittstemperatur in das Abgasrohr gesorgt werden.
Handelt es sich beim herkömmlichen Kessel um einen atmosphärischen Kessel, so muss ein Abgasgebläse (z.B. ein Dachventilator, der nur noch "kaltes" Abgas befördern muss) oder ein Zugverstärker 21 (z.B. ein in den Abgasstrom hinein ragender Propeller der über eine Achse mit einem außerhalb des Abgasrohres liegenden Motor verbunden ist) eingefügt werden.

### Stufenweiser Übergang zur Brennwertanlage :

Der Übergang von einer herkömmlichen Feuerungsanlage auf eine vollendete Brennwertanlage kann mit dem Verfahren der vorstehenden Erfindung stufenweise vollzogen werden; Einzelheiten hierzu sind in /11/ mitgeteilt worden.

### 5. Die besonderen Vorteile der Verfahrens

Die besonderen Vorteile des Verfahrens gegenüber dem Stand der Technik lassen sich wie folgt zusammenfassen:
1) Die Kombination von Wasserkondensationskühlung (WKK) im Innern des Abgasrohres 90 und Luftkondensationskühlung (LKK) am Kaminende sorgt für **eine sehr weitgehende Entwärmung und Entfeuchtung** des Abgases. Bei entsprechender Vorkühlung durch den Wärmeträger Wasser kann der Luftkondensationskühler (LKK) am Ende der Abgasleitung 90 das Abgas 1b mit normalem Aufwand auf Temperaturen von 5 bis 10 Kelvin oberhalb der Außenluft rückkühlen. Dadurch wird eine weitgehende Entwärmung sichergestellt; die Restwärme des Abgases beträgt weniger als 1 %.
2) Brennwertanlagen werden durch die Erfindung **auch bei herkömmlichen Heizungssystemen** mit ihrer meist relativ hoher Rücklauftemperatur auf einen **hohen Wirkungsgrad** verbessert.
3) Die Kühlung der Abgasleitung 90 durch Wärmeübertrag auf an ihrer Innenwand herunter fließendes Kühlwasser 4a stellt eine **ziemlich optimale Form der Wärmeübertragung** vom Abgas 1 b auf Kühlwasser dar. Die innere Wand 20a der Abgasleitung 90 stellt gleichzeitig die Begrenzung für beide am Wärmeübertrag beteiligten Stoffströme (hier also Abgas 1 b und Kühlwasser 4a) dar. Der Zusatzaufwand ist gering; der Wärmeübergang ist wegen der Kondensation hoch und erfolgt direkt auf das Kühlmedium.
4) **Universeller Einsatz:** Die kamingetragene Wasserkondensationskühlung (WKK) und die Luft- Kondensationskühlung (LKK) am Kaminende können sowohl hinter Brennwertkesseln als auch hinter Standardkesseln und Niedertemperaturkesseln zur Anwendung kommen.
5) Durch geeignete Prozessführung (siehe z.B. Abschnitt 4, Punkt "17 kompakter LKK und WKK" am Kaminende) kann sogar dafür gesorgt werden, dass die Temperatur des Abgases in der Abgasleitung für einen eigenständigen Auftrieb ausreichend ist; die in diesem warmen Abgas enthaltene Abgaswärme wird ja im abschließenden Luftkondensationskühler wieder weitgehend zurückgewonnen. Auch die Nutzung der Kaminwärme wird hierbei nicht eingeschränkt.
6) Durch die Verwendung von Raumluft als Zuluft für den Brenner bleibt der Wärmeinhalt dieser Abluft vollständig dem System erhalten. Auch der in der Abluft des Raumes enthaltene Wasserdampf wird letztendlich durch den Wärmetausch im Luftkondensationskühler am Kaminkopf genutzt.

Außer diesen technischen Vorteilen ergeben sich auch wirtschaftliche und - insbesondere in Bezug auf die gewachsene Rechtslage in der Bundesrepublik Deutschland - energiepolitische Vorteile, auf die in /11/ besonders verwiesen wurde.

### Schrifttum:

**/1/ RECKNAGEL-SPRENGER :** Taschenbuch für Heizung und Klimatechnik, Oldenbourg Verlag München, 68. Auflage 1997, Seite 648 (Abschnitt 2.3.1-2.3.3c)
/2/ Erste Verordnung zur Durchführung des Bundes- Immissionsschutzgesetzes (Verordnung über Kleinfeuerungsanlagen -1. BImSchV), Bundesgesetzblatt (1997), Teil I Nr. 17, S. 491 ff., ausgegeben am 20.3.1997
/3/ LUTHER, Gerhard : "Ein folgenschwerer Denkfehler in der Kleinfeuerungsanlagenverordnung", Gesundheitslngenieur **117** (1996), S. 113-126 zugänglich auch über. http://www.uni-saarland.de/fak7/fze/KFA.htm
/4/ Wallerang ,Elmar : "Der Heizungskeller muss bürokratisch entrümpelt werden", VDI-Nachrichten, **19.12.** 2003, Seite **14** zugänglich auch über http://www.uni-saarland.de/fak7/fze/KFA.htm
/5/ LUTHER, Gerhard : "Abgaswandler ", Offenlegungsschrift DE 197 14 760 A1 vom 15.10.1998 und zugehörige Patentschrift DE 197 14 760 C2 vom 1.3.2001
/6/ LUTHER, Gerhard : "Abgaswandler ", Offenlegungsschrift DE 197 52 709 A1 vom 24.6.1999 und zugehörige Patentschrift DE 197 52 709 C2 vom 28.8.2003
/7/ LUTHER, Gerhard : "Abgaswandler ", Offenlegungsschrift EP 0 870 996 A2 vom 14.10.1998
/8/ LUTHER, Gerhard : "Nutzungsseitige Wärmerückgewinnung aus Abgas ", Offenlegungsschrift DE 4425741 A1 vom 25.1.1996
/9/ Luther, G. und Altgeld, H.:"Die außen liegende Wandheizung", Gesundheitslngenieur **123** (2002), S. 8-15
/10/ Luther, Gerhard: "Messverfahren zur Bestimmung des Abgasverlustes von Feuerungsanlagen mit Abgaskondensation", Patentantrag DE 10 2004 058 520.2 vom 17.11.2004
/11/ Luther, Gerhard: "Nutzung der Restwärme des Abgases eines Wärmeerzeugers", Patentantrag DE 10 2004 005 194 vom 03.02.2004

### Bezugszeichen (Stand 2005_0120)

| | | |
|---|---|---|
| 1 | Wärmeerzeuger | K Bs A |
| | Kessel | B Bs A |
| 1 a | Kondenswasser | B Bs |
| | auskondensiertes Wasser | Bs |
| | Kondensat | B Bs |
| | saures Abwasser | Bs |
| | Kondensationswasser | A |
| 1 b | Abgas | K B Bs A |
| | Abgasstrom | B Bs |
| 2 | Gebläse | B Bs |
| | Brennergebläse | Bs |
| 3 | Brenner | B Bs |
| 4 | Zuleitung | B Bs |
| 4a | Kühlwasser | K B Bs A |
| | Wasser | K |
| 4b | Düsen | Bs |
| 5 | Fördermaschine | B Bs |
| 5a | Verbrennungsluft | B Bs A |
| 5b | Kühlmedium | B Bs |
| 7 | Auskoppel-Vorrichtung | B Bs A |
| | Auskopplungs-Vorrichtung | A |
| | Auskoppelstelle | A |
| | T-Stück | K |
| 8 | Luftkondensationskühler (LKK) | B Bs A |
| 8a | Frischluft | B Bs A |
| | Außenluft | B Bs |
| | Frischluftstrom | B |
| 9 | Kamin | Bs |
| 19 | Abgasrohr | B Bs A |
| | Abschnitt des Abgasrohres | A |
| 20 | Wasserkondensationskühler (WKK) | Bs |
| 20a | Innenwand | B Bs |
| | innere Wand | Bs |
| | innere Rohrwand | A |
| 20b | Trennwand | B Bs |
| 21 | Druckverstärker | B Bs |
| | Zugverstärker | Bs |
| | Abgasgebläse | Bs |
| 22 | Pumpe | K Bs A |
| | Kühlwasserpumpe | B Bs |
| 41 a | Zwischenspeicherung | K |
| | Sammelbehälter | B Bs |
| | Vorratsgefäß | B Bs A |
| | Vorratsbehälter | Bs |
| 48 | Nutzwärmeabgabe | K |
| | Wärmetauscher | B Bs |
| | Heizkörper | B Bs A |
| 49 | Wasserluftkühler (WLK) | B Bs |
| 81 | äußere Hülle | B Bs |
| | Hüllrohr | A |
| 82 | Ansaugöffnung | B Bs |
| 83 | Hüllrohr | B Bs |
| 84 | Kunststoffrohr | B Bs |
| 85 | Wärmedämmschicht | B Bs |
| 86 | Passring | B Bs |
| 87 | äußerer koaxialer Spalt | B Bs |
| 88 | (Frischluft) Gebläse | B Bs A |
| | Ventilator | Bs |
| 89 | innerer koaxialer Spalt | B Bs |
| | innerer Spalt | Bs |
| | Ringspalt | A |
| 90 | Abgasleitung | K B Bs A |
| | Abgasrohr | K B Bs A |
| 91 | Kaminfuß | B Bs |
| 92 | Blende | B Bs A |
| 93 | Schachtöffnung | B Bs A |
| 93a | Schachtöffnung | Bs |
| 93b | Schachtöffnung | B Bs A |
| 94 | Schachtabdeckung | B Bs |
| 95 | Ringkanal | B Bs |
| | Ringspalt | Bs A |
| 96 | Einleitungsstelle | K A |
| | Einspeisestelle | B Bs A |
| | Einspeise Stelle | Bs |
| | Einspeisungsstelle | Bs |
| 96a | Revisionsstück | K B Bs A |
| 96b | obere Reinigungsklappe | Bs A |
| 99 | Kaminschacht | B Bs A |
| **Abkürzungen**: **A** = PatentAnsprüche ; **Bs** = Beschreibung; **B** = BildUnterschriften; **K** = Kurzfassung; | | |

### Bildunterschriften

**Bild 1: Abgas Wärmeübertrager im Kondensationsbetrieb. Schematische Darstellung des Standes der Technik.** Abgas 1b und Kühlmedium 5b strömen gegensinnig an einer wärmeübertragenden Trennwand 20b entlang. Die beiden Fluide werden durch jeweils eigene Fördermaschinen 5 und 2 (2 ist das Gebläse für den Brenner 3) angetrieben. Abgasseitig kann Kondenswasser 1 a ausfallen, das über eine Auskoppel - Vorrichtung 7 in einen Sammelbehälter 41 a abgeleitet wird.
**Bild 2: Abgas-Zuluft -Verfahren nach dem Stand der Technik:** Abgasleitung 90 in einem Kaminschacht 99 zur Versorgung des Kessels 1 mit Verbrennungsluft 5a, welche an der Unterseite der Schachtabdeckung 94 über den Zuluft Ringkanal 95 vom Brennergebläse angesaugt.
**Bild 3: WasserKondensationskühler (WKK) als Abgas-Wärmetauscher mit innerer Wasserkühlung.** An der Innenwand 20a des ("ausgewalzt" gezeichneten) Abgasrohres wird an der oberen Einspeisestelle 96 Kühlwasser 4a über Düsen 4b eingespritzt, welches zusammen mit dem Kondensat 1a die Innenwand 20a als Film oder als Rinnsal herunter läuft. Das Gebläse 2 saugt die Verbrennungsluft 5a über die Außenseite des Abgasrohres an. Die Kühlwasserpumpe 22 und die Zuleitung 4 schließen den Kühlwasserkreis über einen Wärmetauscher 48, beispielsweise einen Heizkörper.
**Bild 4: Abgas- Zuluft Verfahren mit Abluft- Ansaugung :** Die Verbrennungsluft 5a wird an einer Schachtöffnung 93 im Innern des Gebäudes angesaugt und dann in der üblichen Weise über den Zuluft -Ringkanal 95 dem Brenner zugeführt. Die Verbindung zur Außenluft wird durch eine Blende 92 versperrt.
**Bild 5: Luft- Kondensationskühler (LKK) 8 überträgt die Abgaswärme auf einen Frischluftstrom 8a, der zur Belüftung und Beheizung des Hauses dient.** Der Antrieb erfolgt durch ein Frischluft Gebläse 88 , das sich in oder an der Schachtöffnung 93b befindet.
**Bild 6: Längsschnitt durch Doppelrohr - Ausführung des Luftkondensationskühlers (LKK) 8 als zylindrischer Aufsatz auf dem Kamin.** Die Frischluft 8a wird durch Ansaugöffnungen 82 in die äußere Hülle 81 aus Edelstahl gesaugt und steigt langsam in einem relativ breiten äußeren koaxialen Spalt 87 nach oben um dann in einen relativ engen inneren koaxialen Spalt 89 direkt am warmen Abgasrohr 90 entlang nach unten geführt zu werden. Die so aufgewärmte Frischluft 8a wird schließlich an der Schachtöffnung 93b vom Gebläse 88 in den Nutzbereich des Gebäudes gedrückt. Das innere koaxiale Hüllrohr 83 besteht aus einem Kunsstoffrohr 84 mit außenliegende Wärmedämmschicht 85 und einem Passring 86.
**Bild 7: Abgasanlage mit Wasserkondensationskühler (WKK):** Die Kühlwasserpumpe 22 pumpt das Kühlwasser 4a über die Zuleitung 4 zur Einspeisestelle 96, z.B. an dem Revisionsstück 96a, in das Innere des Abgasrohres 90, an dem es dann innen wieder herunter läuft und an der Auskoppel-Vorrichtung 7, z.B. einem Abzweig, vom Abgasstrom 1 b getrennt wird; dann gibt das Kühlwasser 4a seine Wärme über einen Wärmetauscher 48 ab und wird im Vorratsgefäß 41a gesammelt. Der Wärmetauscher 48 kann sich auch in einem Nutzraum befinden.
**Bild 8: Abgasanlage mit Heißgaskühler (HGK) und Wasserkondensationskühler (WKK):**
   Der HGK besteht aus dem temperaturfesten Abgasrohr 19 (z.B. aus Edelstahl), welches durch das Kühlwasser 4a des WKK im Innern und durch im Abgas- Zuluftverfahren zugeführte Verbrennungsluft von außen gekühlt wird. Die Auskoppelung des Kühlwassers 4a in der Auskoppel - Vorrichtung 7 erfolgt nahe am Kessel 1.
   Im Kühlwasserkreis wird das Kühlwasser 4a dann über die Zuleitung 4 und den NT- Heizkörper 48 zur Einspeisung in das Abgasrohr 90 geführt, läuft dort im Innern herunter und erhält die letzte Aufheizung durch das noch relativ heiße Abgas im temperaturfesten Abgasrohr 19 zwischen Kessel 1 und Kaminfuß 91 .
**Bild 9: Kamin gestützte Wärmerückgewinnung aus dem Abgas 1 b eines herkömmlichen**
**Kessels 1.** Das Abgas 1 b wird zunächst im Heißgaskühler HGK durch die Verbrennungsluft 5a und das aus dem Wasserkondensationskühler (WKK) austretende Kühlwasser 4a auf eine Temperatur abgekühlt, die mit seinem weiteren Transport durch den WKK verträglich ist. Der erforderliche Beförderungsdruck wird durch den Druckverstärker 21 gewährleistet. Im Luftkondensationskühler (LKK) 8 erfolgt dann die letzte Abkühlung mit Außenluft 8a, die als aufgewärmte Frischluft dem Hause zugeführt wird. Die Rückkühlung des Kühlwassers 4a erfolgt in einem Wärmeübertrager bzw. Niedertemperatur- Heizkörper 48.
**Bild 10: Kamin gestützte Wärmerückgewinnung mit Frischlufterwärmung im Wasserluftkühler (WLK).** Das Abgas 1 b wird zunächst im Heißgaskühler HGK durch die Verbrennungsluft 5a und das aus dem Wasserkondensationskühler (WKK) austretende Kühlwasser 4a auf eine Temperatur abgekühlt, die mit seinem weiteren Transport durch den WKK verträglich ist. Der erforderliche Beförderungsdruck wird durch den Druckverstärker 21 gewährleistet. Das Kühlwasser 4a erreicht seine niedrigste Temperatur im Wasserluftkühler (WLK) 49 durch Wärmetausch mit Außenluft 8a, die als aufgewärmte Frischluft dem Hause zugeführt wird.

## Patentansprüche

1. Verfahren zur Nutzung der Abgaswärme eines Wärmeerzeugers (1), dessen Abgas (1b) durch einen Kamin oder eine Abgasleitung, die zur Ableitung von Kondenswasser und auch von zusätzlichem Wasser geeignet sind, geführt wird, wobei als Wärmeträger Wasser und/oder Frischluft/Umluft benutzt wird,
**dadurch gekennzeichnet, dass**
das als Bestandteil der Feuerungsanlage oder einer sonstigen Wärmeerzeugeranlage bereits sowieso vorhandene Abgasrohr (90) benutzt wird als bis in den Kondensationsbereich des Abgases als Wasserkondensationskühler (WKK) betriebener Wasser- Abgas- Wärmetauscher,
wobei der Übertrag der fühlbaren Wärme und der Kondensationswärme des Abgases (1 b) auf das Kühlwasser (4a) im Innern des Abgasrohres (90) durch direkten Kontakt des Kühlwassers (4a) mit dem Abgas (1 b) und teilweise mit der inneren Rohrwand (20a) stattfindet.

2. Verfahren nach Anspruch 1 **dadurch gekennzeichnet, dass**
das Kühlwasser (4a) für die innere Kühlung des Abgasrohres (90) an einer oben gelegenen Einspeisestelle (96) in das Abgasrohr (90) eingeführt oder eingesprüht wird und an der inneren Rohrwand (20a) des Abgasrohres (90), also im Gegenstrom und im direkten Kontakt zu dem zur Mündung des Abgasrohres fließenden Abgas (1b), als Flüssigkeitsfilm oder als Rinnsal hinunter läuft, wobei ein Teil des Kühlwassers (4a) auch als Tropfen innerhalb des Abgasrohres (90) vollständig oder streckenweise frei nach unten fallen kann und
das **dadurch** erwärmte Kühlwasser (4a) an einer unten gelegenen Auskoppel - Vorrichtung (7) ausgekoppelt wird, in einem Vorratsgefäß (41a) zwischengespeichert wird und seine Wärme auf den Rücklauf einer Warmwasserheizung übertragen wird oder seine Wärme in einem sekundären Niedertemperatur Heizkreis oder Heizkörper (48) direkt als Nutzwärme abgibt und
das aus dem Abgasrohr ausgekoppelte Kühlwasser (4a) durch eine Pumpe (22) wieder der Einspeisestelle (96) zugeführt wird.

3. Abgaswärmeübertrager zur Durchführung des Verfahrens nach Anspruch 2 **dadurch gekennzeichnet, dass**
die Einspeisestelle (96), an der das Kühlwasser (4a) in das Abgasrohr (90) eingeleitet wird, sich am Kaminkopf, oder an der oberen Reinigungsklappe (96b) oder an einem speziell für diesen Zweck an einer beliebigen aber hoch gelegenen Stelle eingerichteten Revisionsstück (96a) befindet oder dass bereits die Zuleitung (4) des Kühlwassers (4a) im Innern des Abgasrohres (90) verlegt ist und das Kühlwasser (4a) an ihrem Ende direkt ausgesprüht oder ausgespritzt wird
**und dass**
die Auskopplungs - Vorrichtung (7), durch die das Kühlwasser (4a) aus dem Abgasrohr (90) an einer unterhalb der Einspeisestelle (96) gelegenen Stelle ausgeleitet wird , realisiert ist als ein T- Stück im Bereich des waagrechten Abgasrohr -Zwischenstückes zwischen Wärmeerzeuger (1) und Kaminschacht (99) oder realisiert ist als ein im senkrechten Abgasrohr eingebautes T- Stück, das mit einem innerem Auffangkanal für Wasser, das die Wand herunter läuft, ausgestattet ist.

4. Verfahren nach einem der Ansprüche 1 - 3 **dadurch gekennzeichnet, dass**
die Wärme des Niedertemperatur Heizkreises vollständig oder teilweise in einem Umluft- Wasser Wärmeübertrager auf die Umgebungsluft des Aufstellungsortes des Wärmeerzeugers (1) oder eines sonstigen Raumes
**oder**
in einem Frischluft- Wasser Wärmeübertrager (49) auf die Frischluft zur Versorgung eines Raumes übertragen wird.

5. Verfahren zur Nutzung der Abgaswärme eines Wärmeerzeugers (1) nach Anspruch 1, dessen Abgas (1 b) in einer Abgasleitung (90), die gleichzeitig zur Ableitung von Wasser geeignet ist, geführt wird, durch einen bis in den Kondensationsbereich des Abgases als Luftkondensationskühler (LKK) (8) betriebenen Frischluft- Abgas- Wärmetauscher **dadurch gekennzeichnet, dass**
der LKK (8) am Mündungsende des Abgasrohres (90) angebracht ist, wobei er auch teilweise in den Kaminschacht (99) hinein ragen kann, und das Kondensationswasser (1a) das Abgasrohr (90) herunter läuft und über eine untere Auskopplungs - Vorrichtung (7) ausgekoppelt wird und dass
die Frischluft (8a) im Gegenstrom zum Abgas (1 b) aufgewärmt wird und in das Innere des Gebäudes zur Heizung und Frischluftversorgung geführt wird.

6. Verfahren nach Anspruch 5 **dadurch gekennzeichnet, dass**
die Verbrennungsluft (5a) zur Versorgung eines Wärmeerzeugers (1) im Abgas- Zuluft Verfahren nicht mehr aus frischer Außenluft sondern aus der Abluft eines Raumes besteht und durch eine Schachtöffnung (93) und durch den Ringspalt (95) zwischen Abgasrohr (90) und innerer Wand des Kaminschachtes (99) zum Kessel (1) geleitet wird,
wobei eine direkte luftseitige Verbindung zwischen der Schachtöffnung (93) und der Außenluft durch eine Blende (92) verhindert wird, die oberhalb der Schachtöffnung (93) im Ringspalt (95) angebracht ist.

7. Luftkondensationskühler (LKK) zum Einsatz im Verfahren nach einem der Ansprüche 5 - 6 **dadurch gekennzeichnet, dass** er als **Doppelrohr - Wärmetauscher** ausgeführt ist,
dessen inneres Rohr aus dem oberen Teil des Abgasrohres (90), das über den oberen Rand des Kaminschachtes hinaus verlängert worden ist, besteht, **und**
dessen äußeres Rohr in seinem unteren Bereich in den Kaminschacht (99) eingepasst ist und innerhalb des Kaminschachtes (99) bis maximal zu einer Schachtöffnung (93b) geführt wird, wo die im Ringspalt (89) des Doppelrohr- Wärmetauschers geführte Frischluft (8a) mittels eines Gebläses (88) in einen zu beheizenden und zu belüftenden Raum ausgeblasen wird,
wobei der Ringspalt (95) des Kaminschachtes (99) unterhalb der Schachtöffnung (93b) durch eine Blende (92) abgesperrt wird.

8. Abgaswärmeübertrager zur Durchführung des Verfahrens nach Anspruch 1 zur Rückgewinnung der Restwärme des Abgases eines Wärmeerzeugers (1) **dadurch gekennzeichnet, dass** hinter dem Wärmeerzeuger sowohl ein Wasserkondensationskühler (WKK) nach einem der Ansprüche 1 - 4 als auch ein Luftkondensationskühler (LKK) nach einem der Ansprüche 5 - 7 angeordnet sind.

9. Verfahren zur Rückgewinnung der Restwärme des Abgases (1b) eines herkömmlichen Kessels als Wärmeerzeuger (1) **dadurch gekennzeichnet, dass**
die Temperatur des Abgases (1 b) in einem direkt dem Wärmeerzeuger (1) nachgeschalteten Heißgaskühler (HGK) im Hinblick auf eine Verträglichkeit mit Abgasrohren aus Kunststoff und insbesondere mit Abwasser- Rohren (so genannte HT- Rohre) hinreichend abgekühlt wird,
wobei nach dem Heißgaskühler (HGK)
ein Wasserkondensationskühler (WKK) nach einem der Ansprüche 1 - 4 oder ein Luftkondensationskühler (LKK) nach einem der Ansprüche 5 - 7 oder sowohl ein Wasserkondensationskühler (WKK) nach einem der Ansprüche 1-4 als auch ein Luftkondensationskühler (LKK) nach einem der Ansprüche 5-7
angeordnet ist bzw. sind.

10. Kompakter kombinierter Abgaswärmetauscher zur Beheizung und Belüftung beispielsweise eines Dachgeschosses, bestehend aus einem nach Anspruch 7 ausgeführten Luftkondensationskühler (LKK) mit Doppelrohr - Wärmetauscher, dessen Abgasrohr (90) dergestalt als Wasserkondensationskühler (WKK) nach Anspruch 1-2 genutzt wird, dass das Kühlwasser (4a)
in einer Einleitungsstelle (96) in dem über das Dach hinausragenden Teil des Abgasrohres (90) eingespeist wird, und
in einer Auskoppelstelle (7), die im Bereich der Schachtöffnung (93b), an der die Frischluft (8a) aus dem Kaminschacht (99) ausgeblasen wird, liegt, ausgekoppelt wird.
